# FASCICULE DE BREVET EUROPEEN

(11) **EP 3 868 611 B1**
(45) Date de publication et mention de la délivrance du brevet: **20.04.2022**
(21) Numéro de dépôt: 21157183.1
(22) Date de dépôt: 15.02.2021
(51) Int. Cl.: B60R 19/48, B60R 19/18

(54) **ENSEMBLE DE STRUCTURE ARRIÈRE RENFORCÉE DE VÉHICULE AUTOMOBILE**
VERSTÄRKTE HECKSTRUKTUR EINES KRAFTFAHRZEUGS
REINFORCED REAR STRUCTURE OF A MOTOR VEHICLE

(30) Priorité: 21.02.2020 FR 2001731
(43) Date de publication de la demande: 25.08.2021
(73) Titulaire: Renault s.a.s, 92100 Boulogne Billancourt (FR)
(72) Inventeur: DIDIER, Sebastien, 78650 BEYNES (FR)
(74) Mandataire: Renault Group

(56) Documents cités:
- EP-A1- 2 998 168
- EP-A1- 3 070 489
- DE-T5-112012 001 758
- JP-B2- 6 276 872

## Description

La présente invention se rapporte à un ensemble de structure arrière de véhicule automobile incluant un organe de détection pour un système d'aide à la conduite.

Un domaine d'application envisagé est plus précisément la protection d'un dispositif avertisseur d'obstacle en coin situé dans les angles arrière des véhicules automobiles.

Des ensembles de structure arrière de véhicule automobile connus présentent une partie arrière de caisse comportant un espace libre adapté à constituer un coffre et une ouverture arrière débouchant dans ce coffre. Ce dernier est délimité latéralement par deux parois arrière opposées l'une de l'autre par rapport à l'ouverture. Au surplus, l'ensemble de structure arrière comporte un bouclier arrière solidaire de la partie arrière de caisse. Celui-ci s'étend transversalement et il présente deux flans opposés qui viennent s'étendre en retour en regard des deux parois arrière de caisse opposées.

Aussi, entre les parois arrière opposées et leur flanc correspondant, s'étend un espace libre à l'intérieur duquel on vient loger un dispositif avertisseur d'obstacle en coin.

Partant, lorsque le véhicule automobile subit un choc arrière en coin, durant une phase de recul dans un obstacle par exemple, et ce malgré le dispositif avertisseur d'obstacle, ce dernier peut être endommagé et devenir inopérant.

La résistance à un tel choc fait d'ailleurs l'objet de la norme « ECE42 », selon laquelle un impacteur rigide est entraîné à une vitesse de 2,5 km/h selon un angle de 30° par rapport à la direction longitudinale du véhicule, contre le coin arrière de celui-ci. L'intrusion de l'impacteur dans le flanc, durant le choc, tend à venir écraser le dispositif avertisseur d'obstacle contre la paroi arrière correspondante.

Le document EP 2 998 168 A1 décrit une structure arrière de véhicule automobile conforme au préambule de la revendication 1.

Aussi, un problème qui se pose et que vise à résoudre la présente invention est de fournir un ensemble de structures arrière de véhicule automobile qui permette de préserver l'intégrité du dispositif avertisseur d'obstacle lors d'un tel choc.

Dans le but de résoudre ce problème, il est proposé un ensemble de structure arrière de véhicule automobile comprenant : une partie arrière de caisse comportant un coffre présentant une ouverture arrière, et deux parois arrière opposées latéralement l'une de l'autre par rapport à ladite ouverture ; un bouclier arrière solidaire de ladite partie arrière de caisse, ledit bouclier arrière présentant deux flancs opposés déformables venant s'étendre en regard desdites deux parois arrière opposées ; un dispositif avertisseur d'obstacle en coin, situé entre l'une desdites parois arrière et l'un desdits flancs en regard. L'ensemble de structure comprend en outre une plaque support comportant un doigt d'arrêt libre s'étendant en saillie de ladite plaque support, et supportant ledit dispositif avertisseur d'obstacle en coin ; et ladite plaque support est reliée audit un desdits flancs en regard de façon que ledit doigt d'arrêt libre s'étende à l'opposé dudit un desdits flancs, pour pouvoir venir à distance de ladite une desdites parois arrière, ledit doigt d'arrêt étant adapté à venir prendre appui contre ladite une desdites parois arrière lorsque ledit un desdits flancs se déforme vers ladite une desdites parois arrière.

Ainsi, une caractéristique de l'invention réside dans la mise en œuvre d'une plaque support, dénommée également contre-lame arrière, permettant, d'une part de recevoir le dispositif d'avertissement d'obstacle en coin et également, de préserver son intégrité grâce au doigt d'arrêt. En effet, la plaque support vient s'étendre dans l'espace situé entre la paroi arrière et le flanc en regard selon un plan moyen, tandis que le doigt d'arrêt s'étend lui, selon une composante perpendiculaire à ce plan moyen, et à distance de la paroi arrière. De la sorte, après que la plaque support a été solidarisée au flanc contre sa surface interne, et qu'elle a été équipée du dispositif avertisseur d'obstacle, le bouclier arrière est alors installé sur la partie arrière, de manière à ce que les flancs viennent en regard des parois arrière, tandis que le doigt d'arrêt libre s'étend librement en regard de la paroi arrière. Conséquemment, lors d'un choc arrière d'une importance modérée, lorsque le flanc est enfoncé vers la paroi arrière, le doigt d'arrêt vient en appui contre cette paroi arrière et permet d'offrir une résistance à cet enfoncement. En conséquence, le dispositif avertisseur d'obstacle situé entre le flanc et la paroi arrière sont préservés de l'écrasement.

On observera qu'un tel agencement, nécessite peu de transformation par rapport à la conception originelle du véhicule. Car en effet, il convient de prévoir une plaque support assortie de son doigt d'arrêt à la seule géométrie de l'espace situé entre la paroi arrière et le flanc en regard et de la solidariser à l'intérieur du seul flanc. Il n'est nul besoin de prévoir de moyens de fixation complémentaires sur la paroi arrière. Et la plaque support est totalement libre vis-à-vis de cette paroi arrière.

Par ailleurs, l'ensemble de structure selon l'invention comprend en outre, un extracteur d'air ménagé à travers ladite une desdites parois arrière et débouchant dans ledit coffre. L'extracteur d'air est situé sensiblement en regard du dispositif avertisseur d'obstacle que supporte la plaque support et il s'étend sensiblement en saillie de la paroi arrière. L'extracteur d'air permet de relâcher la pression d'air à l'intérieur du coffre et de l'habitacle du véhicule automobile lorsqu'on referme l'ouverture du coffre ou les ouvertures latérales du véhicule. Partant, grâce au doigt d'arrêt, on évite le rapprochement du flanc vers la paroi arrière et partant, le risque d'endommagement du dispositif avertisseur d'obstacle contre l'extracteur d'air.

Préférentiellement, ledit doigt d'arrêt libre est sensiblement tronconique. Partant, il est très résistant en compression. En revanche, si les efforts sont très importants, il peut subir une déformation axiale tout en maintenant une résistance à l'enfoncement importante et sans flambage.

En outre, selon un mode de mise en œuvre préféré, ledit doigt d'arrêt libre présente une base solidaire de ladite plaque support et un sommet libre. En conséquence, le sommet libre d'une section plus faible que la base vient s'étendre en regard d'une surface réduite de la portion arrière de la partie arrière de caisse.

Aussi, et selon un mode particulièrement avantageux de mise en œuvre de l'invention, ladite plaque support et ledit doigt d'arrêt sont formés ensemble d'une seule pièce en matériau polymère. De la sorte, la plaque support peut être obtenue grâce à un procédé d'injection plastique à un coût très avantageux.

Selon un mode de réalisation avantageux, ladite plaque support présente un évidement central, et ledit dispositif avertisseur d'obstacle en coin est maintenu en position fixe en regard d'une portion dudit évidement central. De la sorte, le dispositif avertisseur d'obstacle est maintenu sensiblement au centre de la plaque et il est non seulement préservé en compression grâce au doigt d'arrêt selon une direction sensiblement perpendiculaire au plan moyen défini par la plaque support, mais aussi selon des contraintes s'exerçant sensiblement parallèlement à ce plan moyen.

De plus, l'ensemble de structure conforme à l'invention comprend en outre un capteur de proximité monté sur ledit flanc. Aussi, ledit capteur de proximité est installé sur ledit flanc en regard d'une autre portion dudit évidement central de ladite plaque support.

De surcroît, l'ensemble de structure selon l'invention, comprend en outre une autre plaque support comportant un autre doigt d'arrêt libre s'étendant en saillie de ladite autre plaque support et un autre dispositif avertisseur d'obstacle en coin supporté par ladite plaque support. Et ladite autre plaque support est reliée à l'autre desdits flancs en regard de façon que ledit autre doigt d'arrêt libre s'étende à l'opposé dudit autre desdits flancs, pour pouvoir venir à distance de l'autre desdites parois arrière, ledit autre doigt d'arrêt étant adapté à venir prendre appui contre ladite autre desdites parois arrière lorsque ledit autre desdits flancs se déforme vers ladite autre desdites parois arrière.

Autrement dit, l'ensemble de structure arrière de véhicule automobile selon l'invention comprend une partie arrière de caisse comportant un coffre présentant une ouverture arrière, et deux parois arrière opposées latéralement l'une de l'autre par rapport à ladite ouverture ; un bouclier arrière solidaire de ladite partie arrière de caisse, ledit bouclier arrière présentant deux flancs opposés déformables venant s'étendre en regard desdites deux parois arrière opposées ; deux dispositifs avertisseur d'obstacle en coin, situé respectivement entre lesdites parois arrière et lesdits flancs en regard. Aussi, l'ensemble de structure comprend en outre deux plaques support comportant chacune un doigt d'arrêt libre s'étendant en saillie de la plaque support, chacune supportant ledit dispositif avertisseur d'obstacle en coin ; et lesdites plaques support sont reliées respectivement auxdits flancs en regard de façon que lesdits doigts d'arrêt libres s'étendent respectivement à l'opposé desdits flancs, pour pouvoir venir à distance desdites parois arrière, lesdits doigts d'arrêt étant adaptés à venir prendre appui contre lesdites parois arrière lorsque lesdits flancs se déforment vers lesdites parois arrière.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique de dessus d'un ensemble de structure arrière d'un véhicule automobile ;
[Fig. 2] est une vue schématique partielle en perspective et en éclaté de trois quarts arrière de l'ensemble de structure illustré sur la figure [Fig. 1] ;
[Fig. 3] est une vue schématique partielle en perspective de trois quarts avant de l'ensemble de structure arrière illustré sur la figure [Fig. 1] ;
[Fig. 4] est une vue schématique en perspective de détail d'un élément représenté sur la figure [Fig. 3] ; et,
[Fig. 5] est une vue schématique en coupe verticale transversale de l'objet de l'invention.

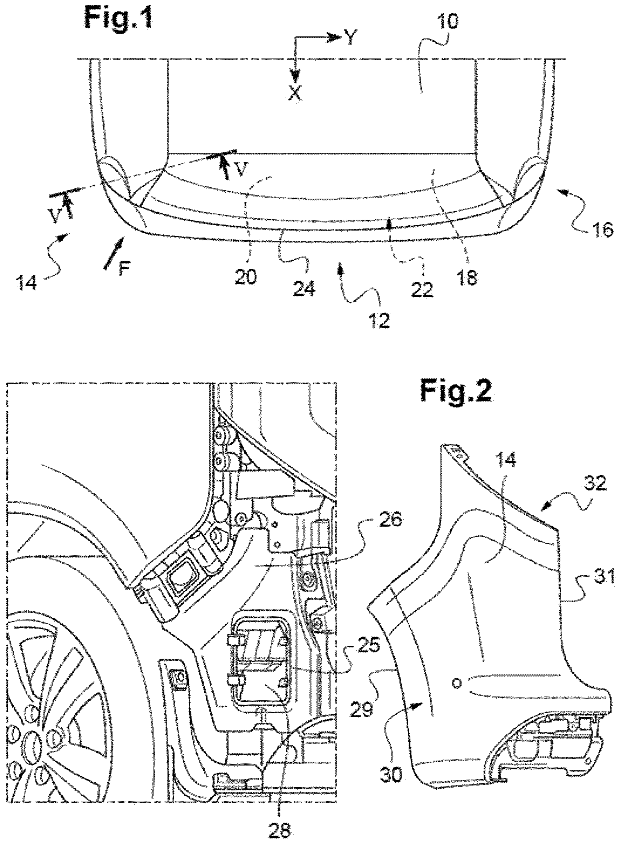

La Figure 1 montre en vue de dessus, un ensemble de structure arrière d'un véhicule automobile 10, s'étendant de l'avant vers l'arrière selon la composante X et de la gauche vers la droite selon la composante Y. L'ensemble de structure du véhicule automobile 10 comporte un bouclier arrière 12 présentant deux flancs opposés latéralement, un flanc gauche 14 et un flanc droit 16.

Par ailleurs, l'ensemble de structure du véhicule automobile 10 comprend une partie arrière de caisse 18 incluant un coffre 20 lequel présente une ouverture 22 refermée par un hayon 24.

La figure [Fig. 2] fait apparaître le flanc gauche 14 du bouclier arrière 12 dans une position détachée de la partie arrière de caisse 18 faisant alors apparaître une paroi arrière gauche 26 formant jupe de la partie arrière de caisse 18. Aussi, un extracteur d'air 28 est ménagé dans cette paroi arrière gauche 26. L'extracteur d'air 28 forme clapet et il permet de faire communiquer le coffre et plus généralement l'habitacle avec l'extérieur. Il présente un cadre rectangulaire 25 s'étendant sensiblement en saillie de la paroi arrière gauche 26. L'extracteur d'air 28 permet l'échappement d'air vers l'extérieur de l'habitacle ou du coffre lorsqu'il est pressurisé par la fermeture du hayon ou bien d'une porte du véhicule.

Le flanc gauche 14 est arrondi entre deux bords opposés, un bord arrière 29 et un bord latéral 31. De surcroît, il présente une surface externe 30 convexe opposée à une surface interne 32 concave. Il est par exemple réalisé dans un matériau polymère éventuellement chargé. On met par exemple en œuvre du polyéthylène. Lorsque le flanc gauche 14 est installé sur la partie arrière de caisse 18, sa surface interne concave 32 vient s'étendre en regard de la paroi arrière gauche 26 de la partie arrière de caisse 18.

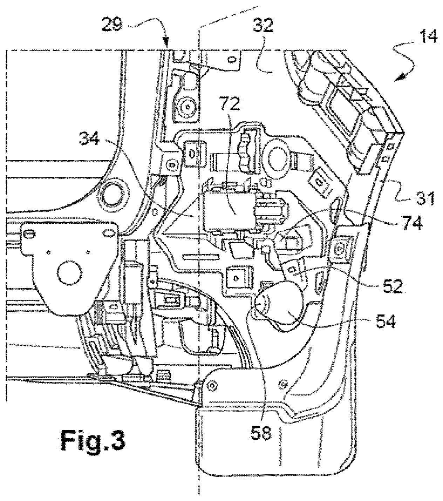

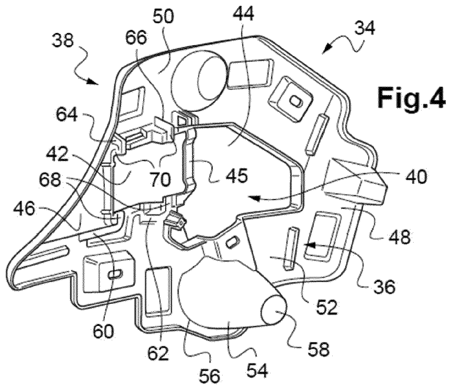

Ainsi, on retrouve sur la figure [Fig. 3] le flanc gauche 14 vue de l'intérieur. On retrouve son bord latéral 31 opposé à son bord arrière 29, et entre les deux, sa surface interne concave 32. Et à l'intérieur du flanc gauche 14, est installée une plaque support 34, aussi dénommée contre-lame arrière. La plaque support 34 épouse sensiblement la forme concave de la surface interne 32 et y est soudée en plusieurs points. Elle permet notamment de venir rigidifier le flanc 14 dans une zone de déformation potentielle. Avant de décrire plus en détail cette plaque support 34 dans sa fonction, on la décrira structurellement à l'appui de la figure [Fig. 4] où elle est seule représentée.

Ainsi, elle apparaît sur cette figure [Fig. 4] selon un angle de vue décalé, selon un plan horizontal, sensiblement vers l'arrière de 45°par rapport à l'angle sous lequel elle apparaît sur la figure [Fig. 3]. Aussi, la plaque support 34 définit une surface générale sensiblement arrondie afin de pouvoir épouser la face interne concave 32 du flanc gauche 14. Sur la figure [Fig. 4] apparaît la surface intérieure concave 36 de la plaque support 34, tandis que sa surface extérieure convexe 38 s'étend à l'opposé. La plaque support 34 présente un évidement central 40 divisé en une fenêtre arrière 42 et un espace libre latéral 44 par un pont 45. Aussi, la plaque support 34 présente une bordure arrière 46 opposée à une bordure latérale 48 et selon une direction verticale, une bordure supérieure 50 opposée à une bordure inférieure 52. On observera que le pont 45, sous la forme d'une languette est en prise aux deux extrémités, dans la bordure supérieure 50 et dans la bordure inférieure 52.

Au surplus, la plaque support 34 comporte un doigt d'arrêt 54 ménagé dans la bordure inférieure 52 et lequel s'étend en saillie de la surface intérieure concave 36. Le doigt d'arrêt 54 présente une forme générale tronconique et il s'étend selon sa direction longitudinale entre une base 56 située dans la bordure inférieure 52 jusqu'à un sommet opposé 58. Le doigt d'arrêt 54 s'étend par exemple sur une longueur comprise entre 50 mm et 100 mm, par exemple 70 mm. Et selon l'exemple présenté ici, le sommet présente un diamètre voisin de 20 mm, tandis que la base présente un diamètre compris entre 50 mm et 60 mm.

Par ailleurs, la plaque support 34 présente autour de sa fenêtre arrière 42, deux bras inférieurs parallèles 60, 62 s'étendant en saillie de la bordure inférieure 52, et à l'opposé deux bras supérieurs parallèles 64, 66 s'étendant en saillie de la bordure supérieure 50. Aussi, les deux bras inférieurs parallèles 60, 62 se terminent par deux crochets inférieurs 68, tandis que les deux bras supérieurs parallèles 64, 66 se terminent par deux crochets supérieurs 70. On observera que les deux crochets inférieurs 68 sont orientés vers les deux crochets supérieurs 70 et inversement.

Comme on va l'expliquer en revenant sur la figure [Fig. 3], sur laquelle la plaque support 34 est solidaire de la surface interne concave 32 du flanc gauche 14, les deux bras inférieurs parallèles 60, 62 et les deux bras supérieurs parallèles 64, 66 permettent de maintenir en position fixe entre les crochets correspondants 68, 70, un dispositif d'avertisseur d'obstacle en coin 72, aussi dénommé « Corner radar ". Celui-ci est ainsi maintenu en regard de la fenêtre arrière 42 et s'appuie partiellement sur le pont 45. Partant, un espace libre s'étend entre le dispositif d'avertisseur d'obstacle en coin 72 et la surface interne 32 du flanc gauche 14.

On observera par ailleurs que cette surface interne 32 inclut également un capteur de proximité 74 sur laquelle il est fixé en regard de l'espace libre latéral 44.

Aussi, on retrouve sur la figure [Fig. 3] le doigt d'arrêt 54 qui s'étend de la bordure inférieure 52 en saillie de la surface intérieure concave 36. Partant, le doigt d'arrêt 54 s'étend également selon une direction normale à la surface interne concave 32 du flanc gauche 14 et à l'opposé de ce dernier.

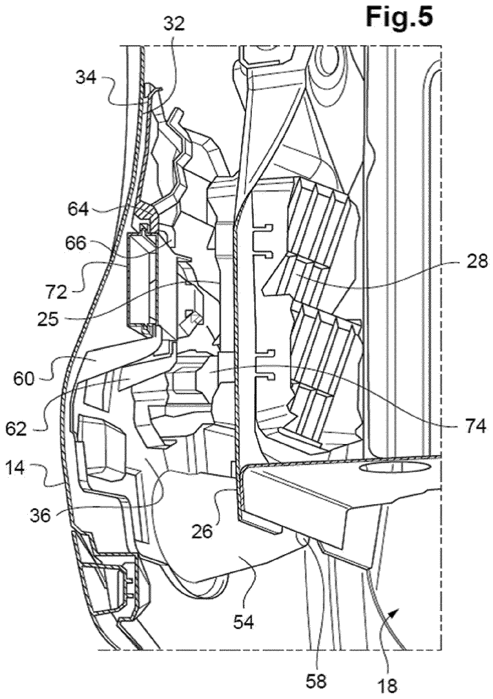

On se reportera à présent sur la figure [Fig. 5] montrant une vue en coupe verticale selon le plan V-V illustré sur la figure [Fig. 1], où le bouclier arrière 12 est installé sur la partie arrière de caisse 18 et où le flanc gauche 14 équipé de sa plaque support 34, est ajusté en regard de la paroi arrière gauche 26. On retrouve sur cette figure l'extracteur d'air 28 installé à travers la paroi arrière gauche 26 et au regard duquel s'étend le dispositif d'avertisseur d'obstacle en coin 72.

Aussi, le sommet 58 du doigt d'arrêt 54 vient s'étendre à distance de la paroi arrière gauche 26 en dessous de l'extracteur d'air 28. On observera que le sommet 58 du doigt d'arrêt 54 est sensiblement plat et il s'étend à une distance de la paroi arrière gauche 26, comprise entre 5 mm et 20 mm, et par exemple 10 mm. On observera que cette distance est bien inférieure à la distance qui sépare le dispositif d'avertisseur d'obstacle en coin 72 de l'extracteur d'air 28. Cette dernière distance est par exemple comprise entre 50 mm et 100 mm.

Ainsi, la plaque support 34 qui permet déjà de rigidifier le flanc arrière gauche 14 a pour vocation également de préserver le dispositif d'avertisseur d'obstacle en coin 72 grâce au doigt d'arrêt 54.

En effet, que ce soit dans le cadre de la norme ECE42, où un impacteur rigide est projeté selon la flèche F telle qu'illustrée sur la figure [Fig. 1] contre le flanc arrière gauche 14 selon un angle de 30° par rapport à la direction longitudinale du véhicule à une vitesse de 2,5 km/h, ou bien dans le cadre d'un impact contre un obstacle lorsque le véhicule recule dans les mêmes conditions, le doigt d'arrêt 54 est alors entraîné selon sa propre direction longitudinale vers la paroi arrière gauche 26, le sommet 28 venant alors en appui à plat contre la paroi arrière gauche 26 ce qui permet d'offrir une résistance à la déformation du flanc arrière gauche 14. Par conséquent, le flanc arrière gauche et la paroi arrière gauche 26 reste à distance l'une de l'autre, et le dispositif d'avertisseur d'obstacle en coin 72 est préservé de l'écrasement entre la plaque support 34 et l'extracteur d'air 28. Le capteur de proximité 74 est préservé dans les mêmes conditions.

Aussi, grâce à sa forme conique, le doigt d'arrêt 54 peut se déformer axialement et ainsi offrir une résistance continue malgré cette déformation.

En outre, on observera que le flanc arrière droit 16 est équipé à l'intérieur d'une même plaque support présentant un doigt d'arrêt et équipé d'un dispositif d'avertisseur d'obstacle en coin, permettant d'obtenir les mêmes effets.

## Revendications

1. Ensemble de structure arrière de véhicule automobile comprenant :
- une partie arrière de caisse (18) comportant un coffre (20) présentant une ouverture arrière (22), et deux parois arrière (26) opposées latéralement l'une de l'autre par rapport à ladite ouverture ;
- un bouclier arrière (12) solidaire de ladite partie arrière de caisse, ledit bouclier arrière présentant deux flancs opposés déformables (14, 16) venant s'étendre en regard desdites deux parois arrière opposées ;
- un dispositif avertisseur d'obstacle en coin (72), situé entre l'une desdites parois arrière (26) et l'un desdits flancs en regard (14) ;
- une plaque support (34) supportant ledit dispositif avertisseur d'obstacle en coin (72) ; ladite plaque support (34) étant reliée audit un desdits flancs (14) en regard; **caractérisé en ce que** ladite plaque support (34) comporte un doigt d'arrêt libre (54) s'étendant en saillie de ladite plaque support (34), et **en ce que** ladite plaque support (34) est reliée audit un desdits flancs (14) en regard de façon que ledit doigt d'arrêt libre (54) s'étende à l'opposé dudit un desdits flancs (14), pour pouvoir venir à distance de ladite une desdites parois arrière (26), ledit doigt d'arrêt (54) étant adapté à venir prendre appui contre ladite une desdites parois arrière (26) lorsque ledit un desdits flancs (14) se déforme vers ladite une desdites parois arrière (26).

2. Ensemble de structure selon la revendication 1, **caractérisé en ce qu'**il comprend en outre un extracteur d'air (28) ménagé à travers ladite une desdites parois arrière (26) et débouchant dans ledit coffre (20).

3. Ensemble de structure selon la revendication 1 ou 2, **caractérisé en ce que** ledit doigt d'arrêt libre (54) est sensiblement tronconique.

4. Ensemble de structure selon la revendication 3, **caractérisé en ce que** ledit doigt d'arrêt libre (54) présente une base (56) solidaire de ladite plaque support (34) et un sommet libre (58).

5. Ensemble de structure selon l'une quelconque des revendications 1 à 4, caractérisé en ce ladite plaque support (34) et ledit doigt d'arrêt (54) sont formés ensemble d'une seule pièce en matériau polymère.

6. Ensemble de structure selon l'une quelconque des revendications 1 à 5, caractérisé en ce ladite plaque support (34) présente un évidement central (40), et en ce que ledit dispositif avertisseur d'obstacle en coin (72) est maintenu en position fixe en regard d'une portion (42) dudit évidement central (40).

7. Ensemble de structure selon l'une quelconque des revendications 1 à 6, **caractérisé en ce qu'**il comprend en outre un capteur de proximité (74) monté sur ledit flanc (14).

8. Ensemble de structure selon les revendications 6 et 7, **caractérisé en ce que** ledit capteur de proximité (74) est installé sur ledit flanc en regard d'une autre portion (44) dudit évidement central (40) de ladite plaque support (34).

9. Ensemble de structure selon l'une quelconque des revendications 1 à 8, **caractérisé en ce qu'**il comprend en outre une autre plaque support comportant un autre doigt d'arrêt libre s'étendant en saillie de ladite autre plaque support et un autre dispositif avertisseur d'obstacle en coin supporté par ladite plaque support, et **en ce que** ladite autre plaque support est reliée à l'autre desdits flancs en regard de façon que ledit autre doigt d'arrêt libre s'étende à l'opposé dudit autre desdits flancs, pour pouvoir venir à distance de l'autre desdites parois arrière, ledit autre doigt d'arrêt étant adapté à venir prendre appui contre ladite autre desdites parois arrière lorsque ledit autre desdits flancs se déforme vers ladite autre desdites parois arrière.

## Patentansprüche

1. Heckstrukturbaugruppe eines Kraftfahrzeugs, umfassend:
- einen hinteren Karosserieteil (18), der einen Kofferraum (20) mit einer hinteren Öffnung (22) und zwei hintere Wände (26), die einander in Bezug auf die Öffnung seitlich gegenüberliegen, aufweist;
- einen hinteren Stoßfänger (12), der fest mit dem hinteren Karosserieteil verbunden ist, wobei der hintere Stoßfänger zwei gegenüberliegende verformbare Flanken (14, 16) aufweist, die sich gegenüber den beiden gegenüberliegenden hinteren Wänden erstrecken;
- eine Eckhinderniswarnvorrichtung (72), die sich zwischen einer der hinteren Wände (26) und einer (14) der gegenüberliegenden Flanken befindet;
- eine Tragplatte (34), die die Eckhinderniswarnvorrichtung (72) trägt, wobei die Tragplatte (34) mit einer der gegenüberliegenden Flanken (14) verbunden ist;
**dadurch gekennzeichnet, dass** die Tragplatte (34) einen freien Anschlagfinger (54) aufweist, der sich von der Tragplatte (34) vorstehend erstreckt,
und dass die Tragplatte (34) mit der einen der gegenüberliegenden Flanken (14) verbunden ist, so dass sich der freie Anschlagfinger (54) von der einen der Flanken (14) weg erstreckt, um von der einen der Rückwände (26) beabstandet sein zu können, wobei der Anschlagfinger (54) dazu geeignet ist, an der einen der Rückwände (26) anzuliegen, wenn sich die eine der Flanken (14) in Richtung der einen der Rückwände (26) verformt.

2. Struktureinheit nach Anspruch 1, **dadurch gekennzeichnet, dass** sie ferner eine Entlüftungseinrichtung (28) umfasst, die durch eine der Rückwände (26) hindurch ausgebildet ist und in den Kofferraum (20) mündet.

3. Struktureinheit nach Anspruch 1 oder 2, **dadurch gekennzeichnet, dass** der freie Anschlagfinger (54) im Wesentlichen kegelstumpfförmig ist.

4. Struktureinheit nach Anspruch 3, **dadurch gekennzeichnet, dass** der freie Anschlagfinger (54) eine mit der Tragplatte (34) fest verbundene Basis (56) und eine freie Spitze (58) aufweist.

5. Struktureinheit nach einem der Ansprüche 1 bis 4, **dadurch gekennzeichnet, dass** die Tragplatte (34) und der Anschlagfinger (54) zusammen einstückig aus Polymermaterial ausgebildet sind.

6. Struktureinheit nach einem der Ansprüche 1 bis 5, **dadurch gekennzeichnet, dass** die Tragplatte (34) eine zentrale Aussparung (40) aufweist und dass die Eckhinderniswarnvorrichtung (72) in einer festen Position gegenüber einem Abschnitt (42) der zentralen Aussparung (40) gehalten wird.

7. Struktureinheit nach einem der Ansprüche 1 bis 6, **dadurch gekennzeichnet, dass** sie ferner einen an der Flanke (14) montierten Näherungssensor (74) umfasst.

8. Struktureinheit nach Anspruch 6 und 7, **dadurch gekennzeichnet, dass** der Näherungssensor (74) an der Flanke gegenüber einem weiteren Abschnitt (44) der zentralen Aussparung (40) der Tragplatte (34) installiert ist.

9. Struktureinheit nach einem der Ansprüche 1 bis 8, **dadurch gekennzeichnet, dass** sie ferner eine weitere Tragplatte mit einem weiteren freien Anschlagfinger, der sich von der weiteren Tragplatte vorstehend erstreckt, und eine weitere Eckhinderniswarnvorrichtung, die von der Tragplatte getragen wird, umfasst,
und dass die weitere Tragplatte mit einer der gegenüberliegenden Flanken verbunden ist, so dass sich der weitere freie Anschlagfinger von der weiteren der Flanken weg erstreckt, um von der weiteren der Rückwände beabstandet sein zu können, wobei der weitere Anschlagfinger dazu geeignet ist, an der weiteren der Rückwände anzuliegen, wenn sich die weitere der Flanken in Richtung der weiteren der Rückwände verformt.

## Claims

1. Motor vehicle rear structural assembly comprising:
- a rear body portion (18) comprising a boot (20) having a rear opening (22), and two rear walls (26) that are laterally opposite one another with respect to said opening;
- a rear bumper (12) secured to said rear body portion, said rear bumper having two deformable opposite flanks (14, 16) that extend facing said two opposite rear walls;
- a corner obstacle warning device (72) located between one of said rear walls (26) and one of said facing flanks (14);
- a support plate (34) that supports said corner obstacle warning device (72); said support plate (34) being connected to said one of said facing flanks (14);
**characterized in that** said support plate (34) comprises a free bump stop (54) that stands proud of said support plate (34),
and **in that** said support plate (34) is connected to said one of said facing flanks (14) in such a way that said free bump stop (54) extends away from said one of said flanks (14) so as to be able to come to be at a distance from said one of said rear walls (26), said bump stop (54) being designed to press against said one of said rear walls (26) when said one of said flanks (14) deforms towards said one of said rear walls (26).

2. Structural assembly according to Claim 1, **characterized in that** it further comprises an air extractor (28) created through said one of said rear walls (26) and opening into said boot (20).

3. Structural assembly according to Claim 1 or 2, **characterized in that** said free bump stop (54) is substantially frustoconical.

4. Structural assembly according to Claim 3, **characterized in that** said free bump stop (54) has a base (56) that is secured to said support plate (34), and a free tip (58).

5. Structural assembly according to any one of Claims 1 to 4, **characterized in that** said support plate (34) and said bump stop (54) are formed together from a single piece of polymer material.

6. Structural assembly according to any one of Claims 1 to 5, **characterized in that** said support plate (34) has a central cutout (40), and **in that** said corner obstacle warning device (72) is held in a fixed position facing a portion (42) of said central cutout (40) .

7. Structural assembly according to any one of Claims 1 to 6, **characterized in that** it further comprises a proximity sensor (74) mounted on said flank (14).

8. Structural assembly according to Claims 6 and 7, **characterized in that** said proximity sensor (74) is installed on said flank facing another portion (44) of said central cutout (40) of said support plate (34) .

9. Structural assembly according to any one of Claims 1 to 8, **characterized in that** it further comprises another support plate comprising another free bump stop standing proud of said other support plate, and another corner obstacle warning device supported by said support plate, and **in that** said other support plate is connected to the other of said facing flanks in such a way that said other free bump stop extends away from said other of said flanks, so as to be able to come to be at a distance from the other of said rear walls, said other bump stop being designed to press against said other of said rear walls when said other of said flanks deforms towards said other of said rear walls.
